(19) **Europäisches Patentamt**

**European Patent Office**

**Office européen des brevets**

(11) Veröffentlichungsnummer: **0 407 856 A2**

# (12) EUROPÄISCHE PATENTANMELDUNG

(21) Anmeldenummer: 90112648.2

(22) Anmeldetag: 03.07.90

(51) Int. Cl.⁵: **F16B 35/06, F16B 23/00**

(30) Priorität: 13.07.89 DE 3923091

(43) Veröffentlichungstag der Anmeldung:
16.01.91 Patentblatt 91/03

(84) Benannte Vertragsstaaten:
AT BE CH DE DK ES FR GB GR IT LI LU NL SE

(71) Anmelder: SWG Schraubenwerk Gaisbach
GmbH & Co. KG KG
Am Bahnhof 50
D-7112 Waldenburg(DE)

(72) Erfinder: Bauer, Achim
Alte Haller Strasse 16
D-7115 Kupferzell(DE)

(74) Vertreter: Patentanwälte RUFF, BEIER und
SCHÖNDORF
Neckarstrasse 50
D-7000 Stuttgart 1(DE)

(54) **Senkkopfschraube.**

(57) Eine insbesondere als Fensterbauschraube gedachte Senkkopfschraube weist auf ihrem Gewindeschaft 11 ein bis zum Senkkopf 12 reichendes Gewinde 15 auf. Der Senkkopf 12 ist aus einem ersten
kegelförmigen Abschnitt 16 aufgebaut, an den sich
ein zweiter deutlich flacherer Abschnitt 18 anschließt.
Der erste kegelstumpfförmige Abschnitt 16 entspricht in seinem Öffnungswinkel dem Öffnungswinkel üblicher Senkkopfschrauben, hat jedoch in
Längsrichtung der Schraube gesehen eine kürzere
Länge. Dadurch verringert sich die Gesamtlänge des
Senkkopfs 12 und das Gewinde 15 läßt sich bis
näher an das Senkkopfende der Schraube hin vollständig aufwalzen.

F I G. 1

EP 0 407 856 A2

## SENKKOPFSCHRAUBE

Die Erfindung betrifft eine Schraube mit einem Senkkopf und einem Schraubenschaft, der ein bis zum Senkkopf reichendes Gewinde aufweist.

Schrauben dieser Art werden beispielsweise im Fensterbau verwendet. Die Senkköpfe haben etwa die Form eines Kegelstumpfes, dessen Kegelflächen üblicherweise einen bestimmten Öffnungswinkel aufweisen. Bei allen derzeit bekannten Schrauben dieser Art schließt die Seitenflanke des Senkkopfs mit der Längsachse einen Winkel von 45° ein. Diesem Kegelverlauf sind auch die angesenkten Öffnungen von Beschlagteilen oder dergleichen angepaßt.

Im Fensterbau tritt häufig das Problem auf, daß zwei Profile aufeinander festgeschraubt werden sollen, wobei die Profile gegebenfalls relativ dünn sind. Aus diesem Grunde muß das Gewinde des Schraubenschaftes bis an die Unterseite des Senkkopfes heranreichen. Es ist jedoch relativ schwierig, an der Unterseite eines derartigen kegelstumpfförmigen Senkkopfes ein Gewinde bis an diese Unterseite heranreichend voll auszuwalzen.

Es ist bereits eine Schraube bekannt (US-A-32 55 797), bei der ein Senkkopf über eine flache Unterseite in den Schraubenschaft übergeht. Der Senkkopf selbst ist aber spitzer ausgebildet als übliche Senkköpfe, so daß seine axiale Länge größer ist als die üblicher Senkköpfe. Die Schraube enthält in ihrem Kopf keinen Antrieb, da sie durch Festziehen einer Mutter angezogen wird und sich nicht drehen soll. Die Schraube ist zur Verwendung mit nicht angesenkten Löchern bestimmt.

Ebenfalls bekannt ist eine Schraube (GB-A-11 12 810), bei der der etwa linsenförmig ausgebildete Kopf dem Bereich der kegelförmigen Außenseite zwei scharfe deformierbare umlaufende Kanten aufweist. Zwischen den Kanten verläuft der Kegelstumpfbereich abgerundet. Die Kanten sollen beim Festziehen der Schraube zur Herstellung einer Dichtung verformt werden. Das Gewinde der Schraube erstreckt sich über etwa 1/3 des Schaftes.

Der Erfindung liegt die Aufgabe zugrunde, eine insbesondere für den Fensterbau geeignete Senkkopfschraube zu schaffen, die zur Befestigung zweier relativ dünner Gegenstände aneinander sehr gut geeignet ist.

Zur Lösung dieser Aufgabe schlägt die Erfindung vor, bei einer Senkkopfschraube den Senkkopf aus zwei Bereichen aufzubauen, von denen der eine Bereich vom Ende des Senkkopfs, also von dessen ebener Endfläche, ausgeht und einen der Form üblicher Senkköpfe entsprechende Form aufweist, jedoch kürzer ist. Daran schließt sich ein bis zum Gewindeschaft reichender flacherer Bereich an.

Auf diese relativ einfache Weise wird an der Unterseite des Senkkopfs ausreichend Platz geschaffen, so daß das Gewinde voll ausgewalzt bis an den Senkkopf heranreichen kann.

Der flachere Bereich kann beispielsweise ebenfalls ein Kegelstumpf mit einem entsprechend stumpferen Kegelwinkel sein. Es ist jedoch auch denkbar, diesen Bereich insgesamt gebogen oder gekrümmt verlaufen zu lassen.

In Weiterbildung der Erfindung kann vorgesehen sein, daß die axiale Abmessung des Senkkopfs kürzer als diejenige eines normalen Senkkopfs ist. Bei den normalen Senkköpfen wird deren axiale Erstreckung durch den Außendurchmesser des Gewindeschafts, den Öffnungswinkel des Senkkopfs und seinen Außendurchmesser bestimmt. Da diese Größen alle festgelegt sind, ist damit auch die axiale Abmessung bestimmt. Die Maßnahme nach der Erfindung macht es jedoch möglich, den Senkkopf insgesamt kürzer auszubilden, so daß bei den herkömmlichen Beschlägen oder üblichen Profilabmessungen das Gewinde nochmals weiter zum Kopf heranreicht.

Die Erfindung schlägt in Weiterbildung vor, daß der Antrieb der Schraube von einer Ausnehmung gebildet wird, die in einem in der Längsachse der Schraube liegenden Schnitt von etwa parallel zur Schraubenlängsachse verlaufenden Seitenflächen begrenzt wird. Beispiele für derartige Antriebsausnehmungen ist eine Sechskantform oder eine Form, die durch abwechselnd konkav- und konvex gekrümmte glatt ineinander übergehende Kreisbögen gebildet wird.

Die bei Senkkopfschrauben häufig verwendeten Kreuzschlitzantriebe weisen in einem entsprechenden Schnitt stark divergierende Seitenflächen auf, die dazu führen würden, daß bei einer Schraube nach der Erfindung die Ausnehmung nur relativ flach in den Schraubenkopf eingebracht werden könnte, damit das Material des Schraubenkopfes im Bereich der Unterseite nicht zu dünn wird. Da aber auch die Kreuzschlitzaussparungen eine übliche Form aufweisen, ist ihre Verwendung bei einer von der Erfindung vorgeschlagen Schraube nicht besonders günstig. Die von der Erfindung vorgeschlagenen Antriebsausnehmungen haben den Vorteil, daß sie große Drehmomente aufbringen können und der Schraubenkopf dennoch nicht so tief ausgehöhlt ist, daß die spezielle vorgeschlagene Form nicht mehr möglich wäre.

Weite Merkmale, Einzelheiten und Vorzüge der Erfindung ergeben sich aus der folgenden Beschreibung einer bevorzugten Ausführungsform sowie anhand der Zeichnung. Hierbei zeigen:

Fig. 1 einen Längsschnitt durch den oberen Endabschnitt einer Senkkopfschraube,

Fig 2 einen Querschnitt etwa längs Linie II-II in Fig 1.

Die Senkkopfschraube enthält einen Schraubenschaft 11, der im Bereich des einen mit einem Antrieb versehenen Endes der Schraube in einen Senkkopf 12 übergeht. Der Senkkopf 12 wird von einer ebenen Abschlußfläche 13 begrenzt. An die Abschlußfläche 13 schließt sich sehr kurzer zylindrischer Abschnitt 14 an.

Der Schraubenschaft 11 ist mit umlaufenden Gewinde 15 versehen. Das Gewinde ist bis unmittelbar an die Unterseite des Senkkopfs 12 ausgebildet. Es ist durch Walzen hergestellt. Der Senkkopf 12 enthält unmittelbar im Anschluß an den flachen zylindrischen Abschnitt 14 einen Abschnitt 16, in dem die Außenseite bzw. Unterseite des Senkkopfs 12 in einer Kegelstumpffläche liegt. Die im Querschnitt der Figur liegende Kante dieses Abschnittes 16 schließt mit der Längsachse der Schraube einen Winkel von rund 45˙ ein oder anders ausgedrückt, verlaufen die im Schnitt sichtbaren Abschlußkanten des Abschnittes 16 unter einem rechten Winkel zueinander. Durch eine Kante 17 getrennt schließt sich an den ersten Abschnitt 16 des Senkkopfs ein zweiter Abschnitt 18 an, in dem die Unterseite bzw. Außenfläche des Senkkopfs 12 auf einem deutlich flacheren Kegelstumpf liegt. Beispielsweise verlaufen die im Schnitt sichtbaren Kanten dieses zweiten Abschnittes 18 jeweils unter einem Winkel von etwa 76˙ gegenüber der Längsachse der Schraube.

Dieser zweite Abschnitt 18 geht unmittelbar über eine weitere Kante 19 in den Gewindeschaft 11 über. Bei einer tatsächlich hergestellten Ausführungsform verlaufen die Kanten 17 und 19 verrundet.

Aufgrund der flacheren Anordnung des zweiten Senkkopfabschnitts 18 ist die gesamte in axialer Richtung gemessene

Abmessung des Senkkopfs, also der in Axialrichtung gemessene Abstand der Abschlußfläche 13 von der Kante 19, deutlich kürzer als dies bei normalen Senkköpfen der Fall wäre. Dies ist durch die gestrichelte Linie 20 angedeutet, die die geradlinige Verlängerung des ersten Senkkopfabschnittes 16 darstellt.

Aufgrund der kürzeren Ausbildung des Senkkopfs 12 bei unveränderter Geometrie im ersten Abschnitt 16 kann das auf dem Schaft 11 aufgewalzte Gewinde 15 wesentlich näher an die Unterseite des Senkkopfs 12 bzw. auch näher an die Abschlußfläche 13 der Schraube heranreichen.

Zum Antrieb der Senkkopfschraube weist diese eine in ihrer Abschlußfläche 13 mündende Ausnehmung 21 auf. Die Ausnehmungen 21 weist zur Übertragung von Drehmomenten eine in Auf sicht auf den Schraubenkopf nicht kreisrunde Außenform auf. Beispielsweise kann es sich um eine Sechskantausnehmung handeln. In dem in der Figur dargestellten Längsschnitt durch die Schraube weist die Ausnehmung 21 Seitenflächen 22 auf, die etwa parallel zueinander und zu der Längsachse der Schraube verlaufen. Die Seitenflächen 22 können leicht divergieren, etwa in einem Bereich von 2˙. Der Boden 23 der Ausnehmung 21 ist relativ flach ausgebildet, beispielsweise weist er einen Spitzenwinkel 24 von etwa 135˙ - 140˙ auf.

Besonders bevorzugt ist eine Außenform der Ausnehmung 21, bei der sechs konkave und sechs konvexe Kreisbögen abwechselnd aufeinanderfolgen, deren Übergänge glatt sind. Mit einer derartigen Ausnehmung können hohe Drehmomente übertragen werden, so daß die relativ geringe Tiefe der Ausnehmung 21 völlig für die Schraube ausreicht.

Während bei der dargestellten Ausführungsform der Bereich 18 von einer Kegelstumpffläche gebildet wird, könnte er auch insgesamt etwas abgerundet verlaufen, also etwa einer Kugelfläche entsprechen.

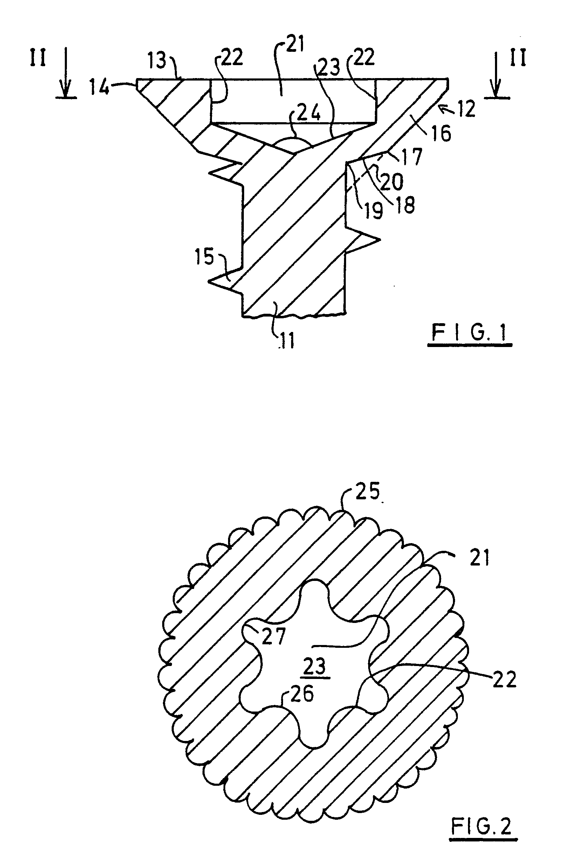

Fig. 2 zeigt nun einen Querschnitt durch die Schraube der Fig. 1 etwas längs der Linie II-II. Aus diesem Querschnitt ist die erwähnte Form der Ausnehmung 21 entnehmbar. Die Ausnehmung 21 wird von Seitenflächen 22 gebildet, die sich aus sechs konkaven und sechs konvexen kreisbogenförmigen Krümmungen zusammensetzen. Dadurch werden sechs nach innen gewandte Bögen 26 und sechs nach außen gewandte Bögen 27 gebildet. Die nach außen gewandten Bögen 27 haben etwa den halben Radius wie die nach innen gewandten Bögen 26. Eine derartige Form der Ausnehmung 21 ist zur Übertragung hoher Drehmomente besonders günstig, so daß sie bevorzugt wird. Selbstverständlich ist jedoch auch eine sechskantige Ausnehmung 21 möglich.

Wie sich ebenfalls aus Fig. 2 ergibt, besitzt die Schraube an der Unterseite ihres Schraubenkopfes im Bereich des ersten kegelförmigen Abschnittes 16 Rippen 25, die dicht an dicht liegen und im Querschnitt etwa halbkreisförmig sind. Die Längsachsen der Rippen 25 schneiden die Längsachse des Schraubenschaftes 11. Die Rippen 25 an der Unterseite des Schraubenkopfes bilden eine Sicherung für die festgedrehte Schraube, die ein unbeabsichtigtes Lösen der Schraube, beispielsweise bei Vibrationen, verhindert. Die Rippen 25 können bei der Herstellung der Schraube im gleichen Arbeitsgang mitangeformt werden, so daß kein zusätzlicher Aufwand erforderlich ist. Als besonders sinnvoll hat es sich gezeigt, wenn etwa 12 bis 20 Rippen 25 vorhanden sind.

Bei der Ausführungsform, die in den Figuren dargestellt ist, weist die Schraube eine ebene Oberseite 13 auf. Selbstverständlich ist es auch möglich, daß diese Oberseite bzw. Abschlußfläche 13 leicht gekrümmt verläuft wie dies bei den herkömmlichen Linsenkopfschrauben der Fall. Linsenkopfschrauben sollen also auch unter den von der Erfindung verwendeten Begriff der Senkkopfschraube fallen.

Bei der in den Figuren dargestellten Ausführungsform liegt die Unterseite des Senkkopfs 12 in dem zweiten Abschnitt 18 auf einem flachen Kegelstumpf mit einem Spitzenwinkel von etwa 150°. Dieser Winkel ist etwas größer als der Spitzenwinkel 24 des Bodens 23 der Ausnehmung 21. Der flachere Bereich 18 kann im Extremfall auch derart flach ausgebildet werden, daß er sich einer Ebene annähert.

## Ansprüche

1. Schraube mit einem Senkkopf (12) und einem Schraubenschaft (11), der ein bis zum Senkkopf (12) reichendes Gewinde (15) aufweist, dadurch gekennzeichnet, daß der Senkkopf (12) einen von seinem Ende (13) ausgehenden ersten kegelförmigen Bereich (16) mit einer der Form üblicher Senkköpfe entsprechenden Form aber kürzerer axialer Länge und einen sich daran anschließenden bis zum Schaft (11) reichenden flacheren Bereich (18) aufweist.

2. Schraube nach Anspruch 1, dadurch gekennzeichnet, daß die axiale Abmessung des Senkkopfs (12) kürzer ist als diejenige eines üblichen Senkkopfs.

3. Schraube nach Anspruch 1 oder 2, dadurch gekennzeichnet, daß der Antrieb der Schraube von einer Ausnehmung (21) gebildet wird, die vorzugsweise im Schraubenlängsschnitt etwa parallel zu der Schraubenlängsachse verlaufende Seitenfläche (22) aufweist

4. Schraube nach einem der vorhergehenden Ansprüche, dadurch gekennzeichnet, daß der Übergang zwischen den beiden Bereichen (16, 18) des Senkkopfs (12) verrundet verläuft.

5. Schraube nach einem der vorhergehenden Ansprüche, dadurch gekennzeichnet, daß der zweite Abschnitt (18) kegelstumpfförmig ausgebildet ist.

6. Schraube nach einem der Ansprüche 3 - 5, dadurch gekennzeichnet, daß die Ausnehmung (21) Sechskantform aufweist.

7. Schraube nach einem der Ansprüche 1 - 5, dadurch gekennzeichnet, daß die Ausnehmung (21) die Form abwechselnd konkav und konvex gekrümmter glatt ineinander übergehender Kreisbögen aufweist.

8. Schraube nach einem der vorhergehenden Ansprüche, dadurch gekennzeichnet, daß sie an der Unterseite des Senkkopfs (12) im ersten kegelförmigen Bereich (16) eine Verrippung aufweist, die von in Längsrichtung der Schraube verlaufenden Rippen (25) gebildet ist, die vorzugsweise dicht benachbart zueinander angeordnet sind.

9. Schraube nach Anspruch 8, dadurch gekennzeichnet, daß der Querschnitt der Rippen (25) etwa Halbkreisform aufweist.

10. Verwendung einer Schraube nach einem der vorhergehenden Ansprüche als Schraube zum Verbinden zweier Bleche, von denen mindestens das eine dünn ist, ohne Mutter.

F I G. 1

FIG.2